# EUROPEAN PATENT APPLICATION

(11) **EP 3 664 080 A1**
(43) Date of publication of application: **10.06.2020**
(21) Application number: 18842229.9
(22) Date of filing: 22.05.2018
(51) Int. Cl.: G10L 13/10, G10L 13/00, G10L 13/02

(54) **INFORMATION PROCESSING DEVICE, INFORMATION PROCESSING METHOD, AND PROGRAM**

(30) Priority: 01.08.2017 JP 2017149096
(71) Applicant: Sony Corporation, Tokyo 108-0075 (JP)
(72) Inventor: SAITO, Mari, Tokyo 108-0075 (JP); INATANI, Soichiro, Tokyo 108-0075 (JP)
(74) Representative: MFG Patentanwälte Meyer-Wildhagen Meggle-Freund Gerhard PartG mbB
(86) International application number: PCT/JP2018/019634
(87) International publication number: WO 2019/026395

(57) **Abstract**

[Problem] To allow a user to clearly perceive classification of information even in a case where output of audio that includes information for different purposes is performed.

[Solution] Provided is an information processing device including an output control unit that controls output of an audio utterance in an audio conversation with a user, in which the audio utterance includes main content and sub-content accompanied with the main content, and the output control unit causes the sub-content to be output in an output mode different from an output mode of the main content. In addition, provided is an information processing method including controlling, by a processor, output of an audio utterance in an audio conversation with a user, in which the audio utterance includes main content and sub-content accompanied with the main content, and the controlling further includes causing the sub-content to be output in an output mode different from an output mode of the main content.

## Description

### Field

The present disclosure relates to an information processing device, an information processing method, and program.

### Background

In recent years, various devices that present information to users by using audio have been popular. In addition, technology has been developed that, on information presentation to users, generates additional information related to content of the presentation and furthermore outputs the additional information. For example, Patent Literature 1 discloses technology that outputs, along with response audio corresponding to a query from a user, a related advertisement.

### Citation List

### Patent Literature

Patent Literature 1: JP 2014-74813 A

### Summary

### Technical Problem

Here, although an advertisement is displayed as visual information by using text, an image, and the like in the technology disclosed in Patent Literature 1,, there may be a case where the user wishes to output, by using audio, accompanying information such as the advertisement, along with originally presented information. However, in a case where both the originally presented information and the accompanying information are output by using audio, there arises a possibility that the user cannot distinguish between the originally presented information and the accompanying information.

Therefore, the present disclosure proposes a novel and improved information processing device, information processing method, and program, which allow a user to clearly perceive classification of information even in a case where output of audio that includes information for different purposes is performed.

### Solution to Problem

According to the present disclosure, an information processing device is provided that includes: an output control unit that controls output of an audio utterance in an audio conversation with a user, wherein the audio utterance includes main content and sub-content accompanied with the main content, and the output control unit causes the sub-content to be output in an output mode different from an output mode of the main content.

Moreover, according to the present disclosure, an information processing method is provided that includes: controlling, by a processor, output of an audio utterance in an audio conversation with a user, wherein the audio utterance includes main content and sub-content accompanied with the main content, and the controlling further comprises causing the sub-content to be output in an output mode different from an output mode of the main content.

Moreover, according to the present disclosure, a program is provided that causes a computer to function as an information processing device comprising an output control unit that controls output of an audio utterance in an audio conversation with a user, wherein the audio utterance includes main content and sub-content accompanied with the main content, and the output control unit causes the sub-content to be output in an output mode different from an output mode of the main content.

### Advantageous Effects of Invention

As described above, the present disclosure allows a user to clearly perceive classification of information even in a case where the output of audio that includes information for different purposes is performed.

Note that the above-described effect is not necessarily limitative. With or in the place of the above effect, there may be achieved any one of the effects described in this specification or other effects that may be grasped from this specification.

### Brief Description of Drawings

FIG. 1 is a diagram for describing output control of an audio utterance by an information processing server according to an embodiment of the present disclosure.
FIG. 2 is a block diagram illustrating a configuration example of an information processing system according to the embodiment.
FIG. 3 is a block diagram illustrating a functional configuration example of an information processing terminal according to the embodiment.
FIG. 4 is a block diagram illustrating a functional configuration example of the information processing server according to the embodiment.
FIG. 5A is a diagram for describing setting of an output mode based on a characteristic of sub-content according to the embodiment.
FIG. 5B is a diagram for describing the setting of the output mode based on the characteristic of the sub-content according to the embodiment.
FIG. 6A is a diagram for describing setting of the output mode based on a user property according to the embodiment.
FIG. 6B is a diagram for describing the setting of the output mode based on the user property according to the embodiment.
FIG. 7 is a diagram for describing setting of the output mode based on a state of a user according to the embodiment.
FIG. 8A is a diagram for describing setting of the output mode based on history information according to the embodiment.
FIG. 8B is a diagram for describing the setting of the output mode based on the history information according to the embodiment.
FIG. 9 is a diagram for describing display control linked with the audio utterance according to the embodiment.
FIG. 10 is a flowchart describing a flow of output control by the information processing server according to the embodiment.
FIG. 11 is a diagram illustrating a configuration example of hardware according to an embodiment of the present disclosure.

### Description of Embodiments

Hereinafter, a preferred embodiment of the present disclosure will be described in detail with reference to the appended drawings. Note that, in this specification and the drawings, components having substantially the same functional configuration are provided with the same reference signs, so that repeated description of these components is omitted.

Note that the description will be made in the following order.
1. Embodiment
   1.1. Outline of Embodiment
   1.2. Configuration Example of System
   1.3. Functional Configuration Example of information processing terminal 10
   1.4. Functional Configuration Example of information processing server 20
   1.5. Specific Examples of Output Control
   1.6. Flow of Output Control
2. Configuration Example of Hardware
3. Conclusion

### <1. Embodiment>

### <<1.1. Outline of Embodiment>>

First, an outline of an embodiment of the present disclosure will be described. As described above, in recent years, various devices that present information to users by using audio have been popular. The device as described above can, for example, recognize a query by an utterance from a user and output an answer corresponding to the query by using audio.

At this point, it is possible to provide different kinds of benefit to the user or a business operator by causing the device to output, besides the answer to the query, additional information accompanied with the query or the answer. Examples of the above-described additional information include useful information related to the query or the answer. As an example, in a case where the user asked "How much does it cost to go to T Station by taxi?", the device may output, by using audio, useful information, which is "Incidentally, there is a bus stop in five minutes on foot from here.", along with the answer "It costs about 1,500 yen.". In this case, the user can receive, along with obtaining the answer to the own query, information related to another option.

In addition, examples of the above-described additional information include advertisement information related to the query or the answer. As an example, in a case where the user asked "How much does it cost to go to T Station by taxi?", the device may output, by using audio, advertisement information "Safe and reasonably priced S Taxi is recommended." from S Taxi Company, along with the answer "It costs about 1,500 yen.". In this case, the business operator such as S Taxi Company can enhance an advertising effect by presenting an on-demand advertisement to the user.

However, in a case where the additional information is the advertisement information as described above, it is sometimes difficult for the user to determine from which sender the information output by using audio is provided. For example, in the case of the example described above, additional information "Safe and reasonably priced S Taxi is recommended." may be useful information that the device generated based on a result of comparing a plurality of companies with reference to reviews on the Internet or the like, or may be mere advertisement information delivered by S Taxi Company.

In addition, in a case where the advertisement information is falsely recognized as useful information by the user, there is a possibility that the case leads to an unfair sales practice, and also there is a concern that the advertisement lacks validity as an advertisement to be presented.

A technical idea according to the present disclosure is generated with a focus on the above-described point and allows a user to clearly perceive classification of information even in a case where the output of audio that includes information for different purposes is performed. Therefore, one of features of an information processing device that implements processing based on an information processing method according to an embodiment of the present disclosure is to cause, when controlling output of audio utterances including originally presented information for a user and additional information accompanied with the presented information, accompanying information to be output in an output mode different from an output mode of the presented information described above.

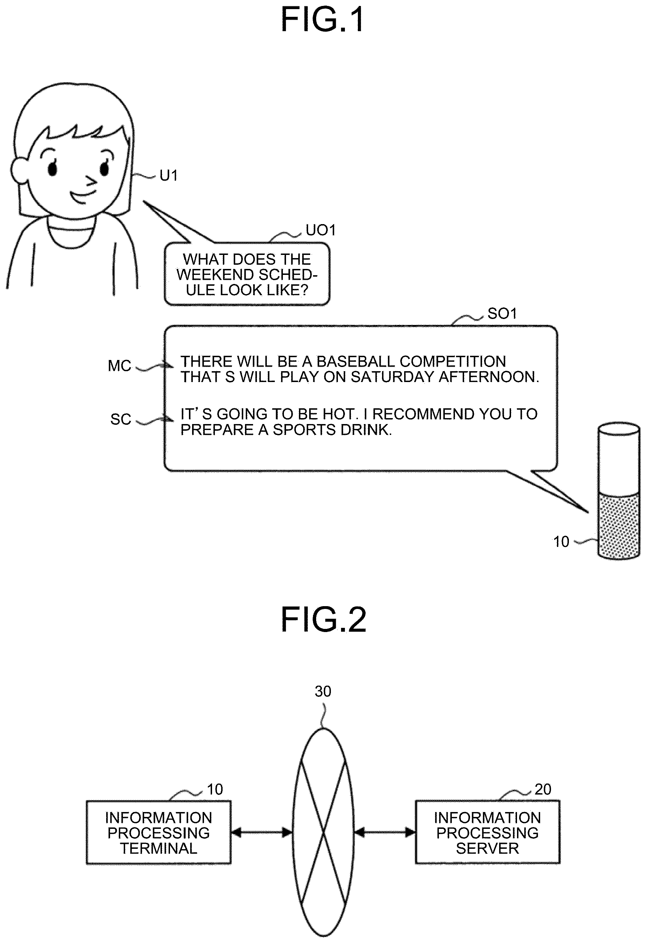

FIG. 1 is a diagram for describing output control of an audio utterance by an information processing server according to the present embodiment. Note that, in the description below, the originally presented information for the user is also referred to as main content and the additional information accompanied with the presented information is also referred to as sub-content.

FIG. 1 illustrates an utterance UO1 by a user U1 and an audio utterance SO1 output by an information processing terminal 10. In the case of the example illustrated in FIG. 1, the utterance UO1 by the user U1 is a query about a weekend schedule, and the information processing terminal 10 outputs the audio utterance SO1, corresponding to the query.

At this point, the audio utterance SO1 output by the information processing terminal 10 includes main content MC, which is an answer corresponding to the utterance UO1; and sub-content SC, which is advertisement information accompanied with the main content MC. In the case of the example illustrated in FIG. 1, the main content MC is audio related to a schedule for a sport competition in which a child of the user U1 will participate, and the sub-content SC is audio related to an advertisement recommending a purchase of a sports drink.

At this point, the information processing server according to the present embodiment causes the information processing terminal 10 to output the sub-content SC in an output mode different from an output mode of the main content MC. For example, the information processing server can control the information processing terminal 10 so that the main content MC and the sub-content SC are output by using different voice types. Note that, in the drawings in the present disclosure, a difference in the output mode is indicated by presence of or a difference in text decoration. In the case of FIG. 1, it is indicated, by a sentence related to the sub-content SC being italicized, that the sub-content SC is output by using a voice type different from a voice type of the main content MC.

The outline of output control of the audio utterance by the information processing server according to the present embodiment has been described above. As described above, the information processing server according to the present embodiment can cause the sub-content such as an advertisement to be output in an output mode different from an output mode of the main content. The above-described control by the information processing server according to the present embodiment allows the user to recognize the main content and the sub-content while clearly distinguishing the main content and the sub-content from each other, based on a difference in the output mode including the voice types, and therefore improves convenience for the user; and also achieves the audio utterance without a possibility of presenting an unfair advertisement.

### <<1.2. Configuration Example of System>>

Next, a system configuration example of an information processing system according to the present embodiment will described. FIG. 2 is a block diagram illustrating the configuration example of the information processing system according to the present embodiment. With reference to FIG. 2, the information processing system according to the present embodiment includes the information processing terminal 10 and an information processing server 20. In addition, the information processing terminal 10 and the information processing server 20 are connected via a network 30 so as to be able to communicate with each other.

### (Information processing terminal 10)

The information processing terminal 10 according to the present embodiment is an information processing device having a function to output the audio utterances including the main content and the sub-content, based on control by the information processing server 20. In addition, the information processing terminal 10 according to the present embodiment may have a function to collect an utterance from the user.

The information processing terminal 10 according to the present embodiment is implemented as various devices having the functions described above. The information processing terminal 10 according to the present embodiment may be, for example, a mobile phone, a smartphone, a tablet-type device, a wearable device, a computer, a stationary dedicated device, or an autonomous mobile dedicated device.

### (Information processing server 20)

The information processing server 20 according to the present embodiment is an information processing device that controls output of the audio utterance by the information processing terminal 10. As described above, the information processing server 20 according to the present embodiment can control output of the audio utterance including the main content and the sub-content. At this point, the information processing server 20 according to the present embodiment can control the information processing terminal 10 so that the sub-content is output in an output mode different from an output mode of the main content.

### (Network 30)

The network 30 has a function to connect the information processing terminal 10 and the information processing server 20. The network 30 may include a public network such as the Internet, a telephone network, or a satellite communication network; and various local area network (LAN) and wide area network (WAN), including Ethernet (registered trademark). In addition, the network 30 may include a dedicated line network such as an Internet protocol-virtual private network (IP-VPN). In addition, the network 30 may include a wireless communication network such as Wi-Fi (registered trademark) and Bluetooth (registered trademark).

The system configuration example of the information processing system according to the present embodiment has been described above. Note that the above configuration described by using FIG. 2 is merely an example, and the configuration of the information processing system according to the present embodiment is not limited to this example. For example, functions included in the information processing terminal 10 and the information processing server 20 according to the present embodiment may be achieved by a single device. The configuration of the information processing system according to the present embodiment is flexibly deformable according to a specification or operation.

### <<1.3. Functional Configuration Example of Information Processing Terminal 10>>

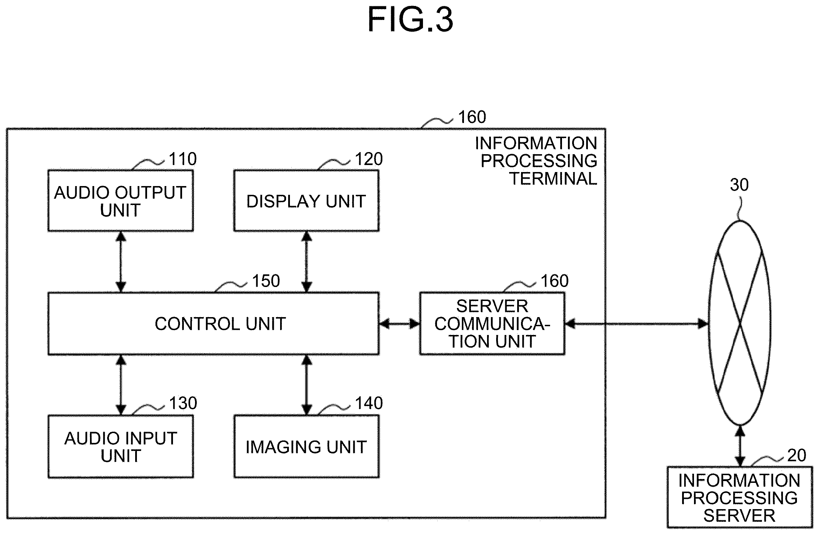

Next, a functional configuration example of the information processing terminal 10 according to the present embodiment will be described. FIG. 3 is a block diagram illustrating the functional configuration example of the information processing terminal 10 according to the present embodiment. With reference to FIG. 3, the information processing terminal 10 according to the present embodiment includes an audio output unit 110, a display unit 120, an audio input unit 130, an imaging unit 140, a control unit 150, and a server communication unit 160.

### (Audio output unit 110)

The audio output unit 110 according to the present embodiment has a function to output auditory information including the audio utterance, and the like. Especially, the audio output unit 110 according to the present embodiment can output, by using audio, the main content and the sub-content in different output targets, based on control by the information processing server 20. Therefore, the audio output unit 110 according to the present embodiment includes an audio output device such as a speaker and an amplifier.

### (Display unit 120)

The display unit 120 according to the present embodiment has a function to output visual information such as an image, text, and the like. The display unit 120 according to the present embodiment may output visual information corresponding to the audio utterance, based on, for example, control by the information processing server 20. Therefore, the display unit 120 according to the present embodiment includes a display device that presents the visual information. Examples of the above-described display device include a liquid crystal display (LCD) device, an organic light emitting diode (OLED) device, and a touch panel.

### (Audio input unit 130)

The audio input unit 130 according to the present embodiment has a function to collect sound information such as an utterance from the user and a background sound. The sound information collected by the audio input unit 130 is used for sound recognition or state recognition by the information processing server 20. The audio input unit 130 according to the embodiment includes a microphone to collect the sound information.

### (Imaging unit 140)

The imaging unit 140 according to the present embodiment has a function to capture an image including the user or a surrounding environment. The image captured by the imaging unit 140 is used for user recognition or state recognition by the information processing server 20. The imaging unit 140 according to the present embodiment includes an imaging device that can capture an image. Note that the above-described image includes a moving image, besides a still image.

### (Control unit 150)

The control unit 150 according to the present embodiment has a function to control each configuration included in the information processing terminal 10. The control unit 150 controls, for example, starting or stopping of each configuration. In addition, the control unit 150 can input a control signal generated by the information processing server 20 into the audio output unit 110 or the display unit 120. In addition, the control unit 150 according to the present embodiment may have a function equivalent to a function of an output control unit 230 in the information processing server 20, the output control unit 230 being described later.

### (Server communication unit 160)

The server communication unit 160 according to the present embodiment has a function to communicate information with the information processing server 20 via the network 30. Specifically, the server communication unit 160 transmits the sound information collected by the audio input unit 130 or image information captured by the imaging unit 140 to the information processing server 20. In addition, from the information processing server 20, the server communication unit 160 receives a control signal or artificial voice related to the audio utterance or the like.

The functional configuration example of the information processing terminal 10 according to the present embodiment has been described above. Note that the above functional configuration described by using FIG. 3 is merely an example, and the functional configuration of the information processing terminal 10 according to the present embodiment is not limited to this example. For example, the information processing terminal 10 according to the present embodiment may not necessarily include all the configurations illustrated in FIG. 3. The information processing terminal 10 can also have a configuration not including the display unit 120, the imaging unit 140, and the like. In addition, as described above, the control unit 150 according to the present embodiment may have a function equivalent to the function of the output control unit 230 in the information processing server 20. The functional configuration of the information processing terminal 10 according to the present embodiment is flexibly deformable according to a specification or operation.

### <<1.4. Functional Configuration Example of Information Processing Server 20>>

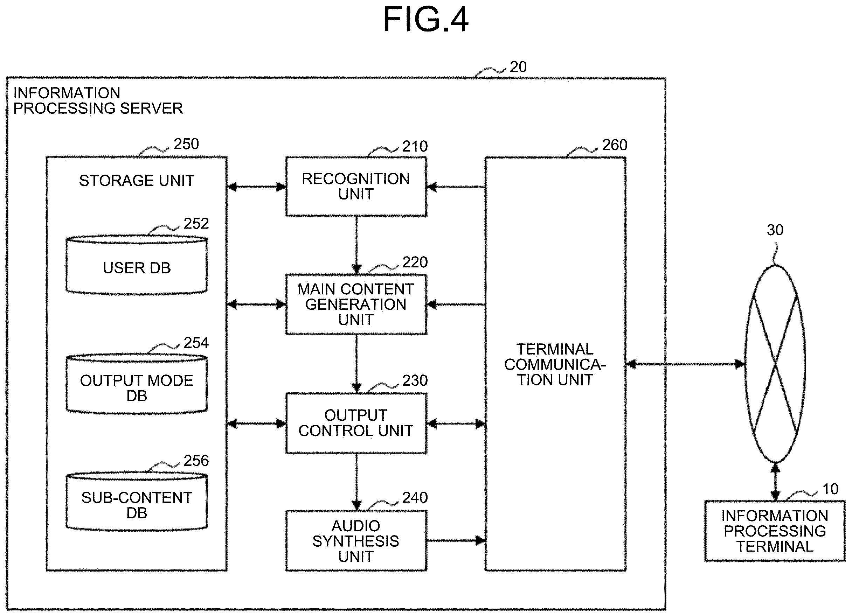

Next, a functional configuration example of the information processing server 20 according to the present embodiment will be described. FIG. 4 is a block diagram illustrating the functional configuration example of the information processing server 20 according to the present embodiment. With reference to FIG. 4, the information processing server 20 according to the present embodiment includes a recognition unit 210, a main content generation unit 220, the output control unit 230, an audio synthesis unit 240, a storage unit 250, and a terminal communication unit 260. In addition, the storage unit 250 includes a user DB 252, an output mode DB 254, and a sub-content DB 256.

### (Recognition unit 210)

The recognition unit 210 according to the present embodiment has a function to perform sound recognition, based on an utterance from the user, which is collected by the information processing terminal 10. Specifically, the recognition unit 210 may convert an audio signal included in the above-described utterance information into text information.

In addition, the recognition unit 210 according to the present embodiment has a function to perform various recognitions related to the user. The recognition unit 210 can recognize, for example, the user by, for example, comparing the utterance from the user or an image of the user, which is collected by the information processing terminal 10, with a voice feature or the image of the user, which is previously stored in the user DB 252.

In addition, the recognition unit 210 can recognize a state of the user, based on the utterance from the user or the image of the user, which is collected by the information processing terminal 10. The above-described state includes various states related to an action or emotion of the user. For example, based on the utterance from the user or the image of the user, which is collected by the information processing terminal 10, the recognition unit 210 can recognize, for example, that the user has acted to interrupt the output of the audio utterance by the information processing terminal 10, or that the user is not concentrating on the audio utterance and is doing another action.

In addition, the recognition unit 210 can recognize, for example, that the user is in a relaxed state or in a tense state, or that the user is showing dislike to the output audio utterance. The recognition unit 210 can perform recognition as described above by using a widely used action recognition method or emotion estimation method. The state of the user recognized by the recognition unit 210 is used for output control of the audio utterance by the output control unit 230.

### (Main content generation unit 220)

The main content generation unit 220 according to the present embodiment has a function to generate the main content included in the audio utterance output by the information processing terminal 10. For example, the main content generation unit 220 can analyze intention of the utterance from the user, based on the text information generated by the recognition unit 210, and generate answer text for the utterance, as the main content.

In addition, the main content according to the present embodiment is not limited to the answer to the query from the user. For example, based on schedule information registered by the user, the main content generation unit 220 can generate text to remind of the schedule, as the main content. In addition, for example, the main content generation unit 220 may take a received e-mail, message, and the like, as the main content.

### (Output control unit 230)

The output control unit 230 according to the present embodiment has a function to control the output of the audio utterance by the information processing terminal 10. As described above, the above-described audio utterance includes the main content and the sub-content included in the main content. The output control unit 230 according to the present embodiment can, based on the main content generated by the main content generation unit 220, obtain the sub-content to be output along with the main content.

For example, in the case of the example illustrated in FIG. 1, the output control unit 230 can obtain the sub-content SC, which is an advertisement for "sports drink", by searching a sub-content DB by using, as a keyword, a term "baseball competition" included in the main content MC.

In addition, as described above, one of the features of the output control unit 230 according to the present embodiment is to cause the information processing terminal 10 to output the sub-content in an output mode different from the output mode of the main content. The above-described feature of the output control unit 230 allows the user to perceive the main content and the sub-content, while clearly distinguishing the main content and the sub-content from each other, and enables separate presentation of information for different purposes to the user.

Note that in the case of the example illustrated in FIG. 1, it has been described that the output control unit 230 causes the main content and the sub-content to be output by using the different voice types. However, control of the output mode according to the present embodiment is not limited to this example. The output mode according to the present embodiment includes, besides the voice types, rhythm, a tone of voice, a prefix and a suffix, an ending of a word, a background sound, or a sound effect. The output control unit 230 according to the present embodiment can achieve, by differentiating an above-described element related to output of the sub-content from the element for the main content, output of the audio utterance in which the sub-content and the main content are differentiated from each other.

Note that the output control unit 230 according to the present embodiment may set the output mode of the sub-content, based on a preset setting. The output control unit 230 may cause the information processing terminal 10 to output the sub-content by using, for example, a voice type previously set by the user.

Meanwhile, the output control unit 230 according to the present embodiment can dynamically control the output mode of the sub-content, based on a context related to the sub-content. The above-described context includes, for example, a characteristic of the sub-content or a characteristic of the user.

Examples of the characteristic of the sub-content include a category of the sub-content and a sender of the sub-content. The output control unit 230 according to the present embodiment may set a different output mode according to a category of a product subjected to the advertisement, or according to the business operator sending the advertisement. The above-described function included in the output control unit 230 enables output, by using audio, of the sub-content in a characteristic output mode of each product or each business operator, and can achieve a higher advertising effect.

In addition, examples of the characteristic of the user include a state of the user, a user property, and history information related to the user. The output control unit 230 may set the output mode of the sub-content, based on the state related to the action of the user or emotion of the user, the state being recognized by the recognition unit 210. The above-described function included in the output control unit 230 enables the control of the output mode according to the state of the user, which changes each time, and can achieve more flexible presentation of the sub-content.

In addition, the user property according to the present embodiment indicates a preference, a tendency, an attribute, or the like of the user, which tends to stay unchanged for a long time. The output control unit 230 can dynamically control the output mode according to an individual user, by obtaining the above-described user-related information recognized by the recognition unit 210, from the user DB 252, which will be described later.

In addition, the output control unit 230 may set the output mode of the sub-content, based on the history information such as a purchase history, reservation history, or reaction to the output sub-content in the past of the user. By, for example, learning the history information, the output control unit 230 can cause the sub-content to be output by using a more attractive output mode.

The outline of the functions included in the output control unit 230 according to the present embodiment has been described above. The output control of the audio utterance by the output control unit 230 according to the present embodiment will be described in detail separately with specific examples.

### (Audio synthesis unit 240)

The audio synthesis unit 240 according to the present embodiment has a function to synthesize, based on control by the output control unit 230, the artificial voice output by the information processing terminal 10. At this point, the audio synthesis unit 240 synthesizes the artificial voice corresponding to the output mode set by the output control unit 230.

### (Storage unit 250)

The storage unit 250 according to the present embodiment includes the user DB 252, the output mode DB 254, and the sub-content DB 256.

### ((User DB 252))

The user DB 252 according to the present embodiment stores various kinds of information related to the user. The user DB 252 stores, for example, a face image and a voice feature of the user. In addition, the user DB 252 stores information related to a user property such as gender, age, affiliation, preference, and tendency of the user.

### ((Output mode DB 254))

The output mode DB 254 according to the present embodiment stores various parameters related to the output mode of the sub-content. The output mode DB 254 may store, for example, a parameter related to the output mode set by the user. In addition, the output mode DB 254 may store, for example, a parameter related to the output mode set for each sender or subject product, which is related to the sub-content.

### ((Sub-content DB 256))

The sub-content DB 256 according to the present embodiment records the sub-content such as an advertisement. Note that the sub-content according to the present embodiment includes, besides the advertisement, recommended information from an acquaintance of the user and a quotation from another content (for example, a book, a news article, or the like). Note that the sub-content according to the present embodiment does not necessarily need to be stored in the sub-content DB 256. The output control unit 230 according to the present embodiment may, for example, obtain the sub-content from another device via the network 30.

### (Terminal communication unit 260)

The terminal communication unit 260 according to the present embodiment has a function to communicate information with the information processing terminal 10 via the network 30. Specifically, from the information processing terminal 10, the terminal communication unit 260 receives the sound information such as the utterance or the image information. In addition, the terminal communication unit 260 transmits, to the information processing terminal 10, the control signal generated by the output control unit 230 or the artificial voice synthesized by the audio synthesis unit 240.

The functional configuration example of the information processing server 20 according to the present embodiment has been described above. Note that the above functional configuration described by using FIG. 4 is merely an example, and the functional configuration of the information processing server 20 according to the present embodiment is not limited to this example. For example, the information processing server 20 may not necessarily include all the configurations illustrated in FIG. 4. The recognition unit 210, the main content generation unit 220, the audio synthesis unit 240, and the storage unit 250 can be included in a device different from the information processing server 20. The functional configuration of the information processing server 20 according to the present embodiment is flexibly deformable according to a specification or operation.

### <<1.5. Specific Examples of Output Control>>

Next, the output control of the audio utterance by the output control unit 230 according to the present embodiment will be described with specific examples. As described above, the output control unit 230 according to the present embodiment can dynamically set the output mode of the sub-content, based on the context related to the sub-content.

### (Setting of output mode based on characteristic of sub-content)

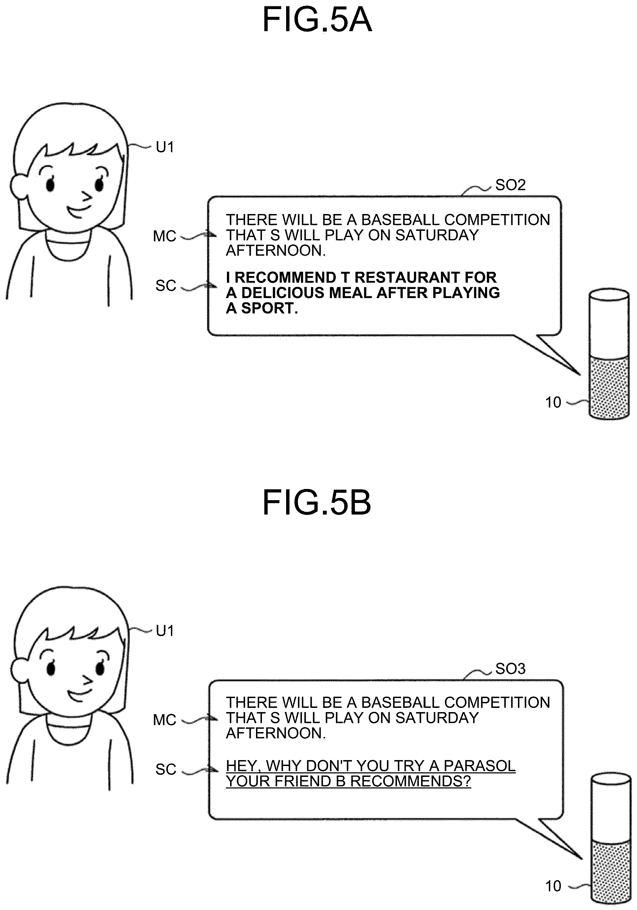

First, setting of the output mode based on the characteristic of the sub-content by the output control unit 230 according to the present embodiment will be described with specific examples. FIG. 5A and FIG. 5B are diagrams for describing the setting of the output mode based on the characteristic of the sub-content. Note that FIG. 5A and FIG. 5B indicate audio utterances SO2 and SO3, respectively, which are output, from the information processing terminal 10, in response to the utterance UO1 from the user U1 indicated in FIG. 1.

In the case of the example illustrated in FIG. 5A, the output control unit 230 causes the information processing terminal 10 to output the sub-content SC, which is different from the sub-content SC in FIG. 1 and is an advertisement for a restaurant, along with the main content MC, which is similar to the main content MC in FIG. 1. At this point, the output control unit 230 according to the present embodiment may set the output mode, based on a category of the sub-content SC. A comparison between FIG. 1 and FIG. 5A shows that the output control unit 230 sets different output modes, based on a difference in the category, "sports drink" or "restaurant", serving as a subject of the advertisement.

Thus, the output control unit 230 can cause the information processing terminal 10 to output the audio utterance, voice type or the like thereof is changed for each category of a product serving as a subject of an advertisement, or the like. The output control unit 230 may output the sub-content by, for example, a female voice, in a case where a category of the subject product is a cosmetic. The control by the output control unit 230 as described above allows the user to perceive the difference in a category of the sub-content, and enables achievement of a more natural audio utterance.

In addition, in the case of the example illustrated in FIG. 5B, the output control unit 230 causes the information processing terminal 10 to output the sub-content SC, which is different from the sub-content SC in FIG. 1 and is recommended information from a friend B of the user, along with the main content MC, which is similar to the main content MC in FIG. 1. Thus, the sub-content according to the present embodiment includes, besides an advertisement, recommended information from the acquaintance, or a quotation from another sentence.

At this point, the output control unit 230 may set the output mode according to the friend B serving as the sender of the sub-content SC. The output control unit 230 may output the sub-content SC by using, for example, a voice type similar to a voice type of the friend B. In addition, the output control unit 230 can cause the sub-content SC to be output by using a tone of voice different from a tone of voice of the main content MC. In the case of FIG. 5B, the output control unit 230 sets a more informal tone for the sub-content SC against a polite tone of voice of the main content MC.

Furthermore, the output control unit 230 may differentiate the sub-content SC from the main content MC by adding a prefix or a suffix. In the case of the example illustrated in FIG. 5B, by adding a prefix "hey", the output control unit 230 emphasizes that output of the sub-content SC has started. In addition, by changing an ending of a word of the sub-content SC, the output control unit 230 allows the user to perceive that information being output is the sub-content SC. For example, in a case of Japanese language or the like, in which a verb is placed at an end of a sentence, the output control unit 230 may change a kind or conjugation of the verb. In addition, the output control unit 230 may change the ending of the word by, for example, converting the sentence to a tag question.

The above-described function included in the output control unit 230 according to the present embodiment enables the output of the sub-content SC with, for example, the output mode that resembles the sender, places an emphasis on the sub-content SC, and is expected to have an effect to draw more interest of the user.

Note that, FIG. 5B has been described taking, as an example, a case where the sender of the sub-content is a friend of the user. However, in a case where the sub-content is an advertisement, the output control unit 230 can set the output mode according to the sender of the sub-content, namely, the business operator. The output control unit 230 may output the sub-content by using, for example, a background sound or a sound effect used in a television commercial or a radio commercial by the above-described business operator. In addition, the output control unit 230 can also cause the sub-content to be output by using a voice type of an actor or character appointed to the television commercial, or the like.

### (Setting of output mode based on characteristic of user)

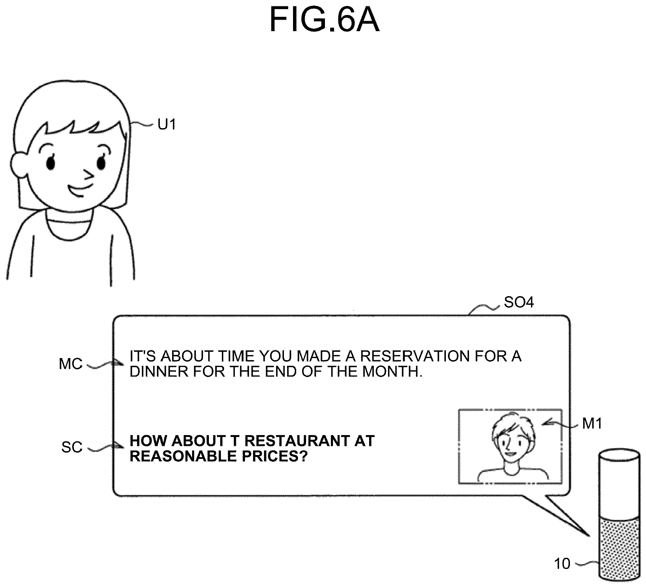

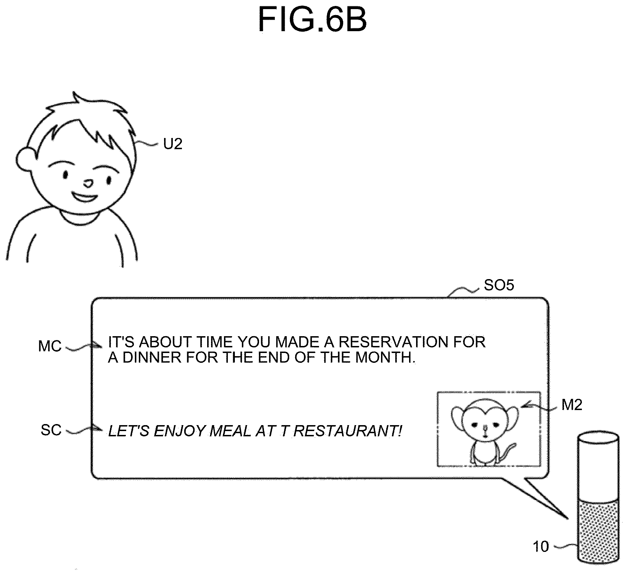

Next, setting of the output mode based on the characteristic of the user by the output control unit 230 according to the present embodiment will be described with specific examples. FIG. 6A and FIG. 6B are diagrams for describing setting of the output mode based on the user property. FIG. 6A and FIG. 6B indicate audio utterances SO4 and SO5, respectively. Each of the audio utterances includes the main content MC, which is a reminder of a schedule input by the user, and the sub-content SC, which is an advertisement for a restaurant.

In the case of the example illustrated in FIG. 6A, the output control unit 230 obtains, from the user DB 252, a user property of the user U1 recognized by the recognition unit 210; and determines the output mode of the sub-content SC. Specifically, the output control unit 230 obtains information that the user U1 is a mother in a family and outputs the sub-content SC by using an expression "reasonable", which is focusing on a price. Note that a fact that the user U1 tends to focus on a price may be information registered by the user U1. Thus, the output control unit 230 can change a modifier related to the sub-content SC, according to the user property such as gender or age of the user.

In addition, the output control unit 230 can set a voice type of the sub-content SC, according to, for example, the gender of the user. In the case of the example illustrated in FIG. 6A, the output control unit 230 sets a voice type of a male speaker model M1 for the female user U1 and outputs the sub-content SC.

Meanwhile, in the case of the example illustrated in FIG. 6B, the output control unit 230 obtains information that a user U2 is a child and outputs the sub-content SC by using an expression "Let's enjoy", which is focusing on amusement. In addition, the output control unit 230 sets a voice type of a character speaker model M2 for the child user U2 and outputs the sub-content SC.

Thus, the output control unit 230 according to the present embodiment enables flexible setting of the output mode corresponding to the characteristic of the user, which tends to stay unchanged for a long time, and can further enhance attractiveness related to the sub-content. In addition, the output control unit 230 according to the present embodiment may set the output mode based on the user property related to a plurality of users. In a case where, for example, the mother user U1 and the child user U2 are recognized together, the output control unit 230 may set the output mode of the sub-content, based on the user property common to the users U1 and U2. In addition, the output control unit 230 can set the output mode in units such as a family including a plurality of users.

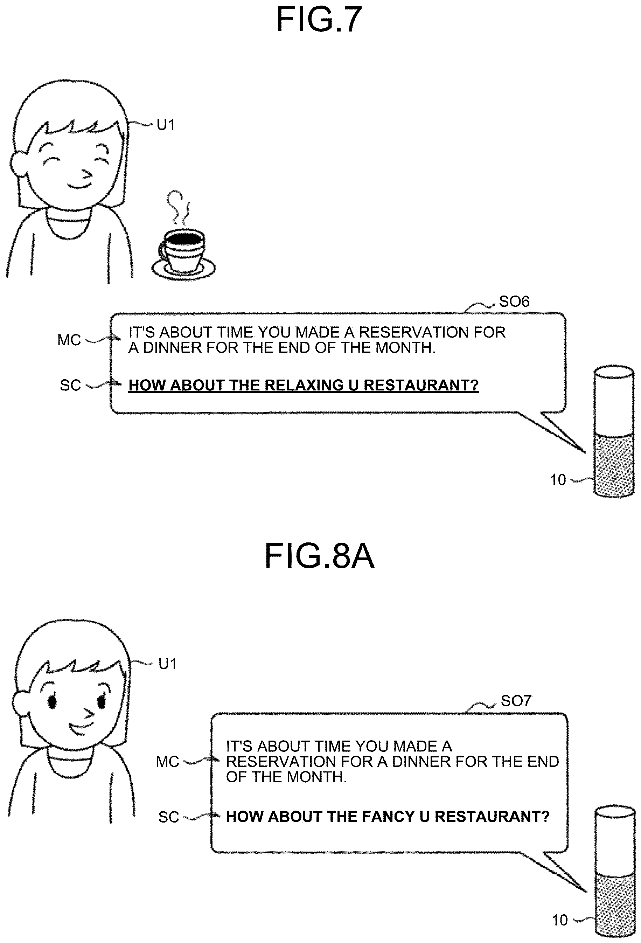

In addition, the output control unit 230 according to the present embodiment can set the output mode of the sub-content, based on the state of the user recognized by the recognition unit 210. FIG. 7 is a diagram for describing setting of the output mode based on the state of the user. As with FIG. 6A and FIG. 6B, FIG. 7 indicates an audio utterance SO6 including the main content MC, which is the reminder of the schedule, and the sub-content SC, which is an advertisement for a restaurant.

In the case of the example illustrated in FIG. 7, the output control unit 230 sets the output mode of the sub-content SC, based on the recognition unit 210 having recognized that the user U1 is in the relaxed state. Specifically, the output control unit 230 outputs the sub-content SC by using an expression "relaxing", corresponding to the state of the user. In addition, the output control unit 230 outputs the sub-content SC by using the rhythm according to the state of the user. The above-described rhythm includes speed, accent, length, and the like of the audio utterance.

The above-described function included in the output control unit 230 according to the present embodiment enables flexible setting of the output mode according to the state of the user, which changes each time. Note that, in a case where the user is recognized as being in a busy state, the output control unit 230 can perform control, for example, such that frequency of the output of the sub-content is decreased, or that the output of the sub-content is disabled. In addition, in a case where the user has showed dislike to the output of the sub-content or has acted to interrupt the output of the sub-content, the output control unit 230 may stop the output of the sub-content.

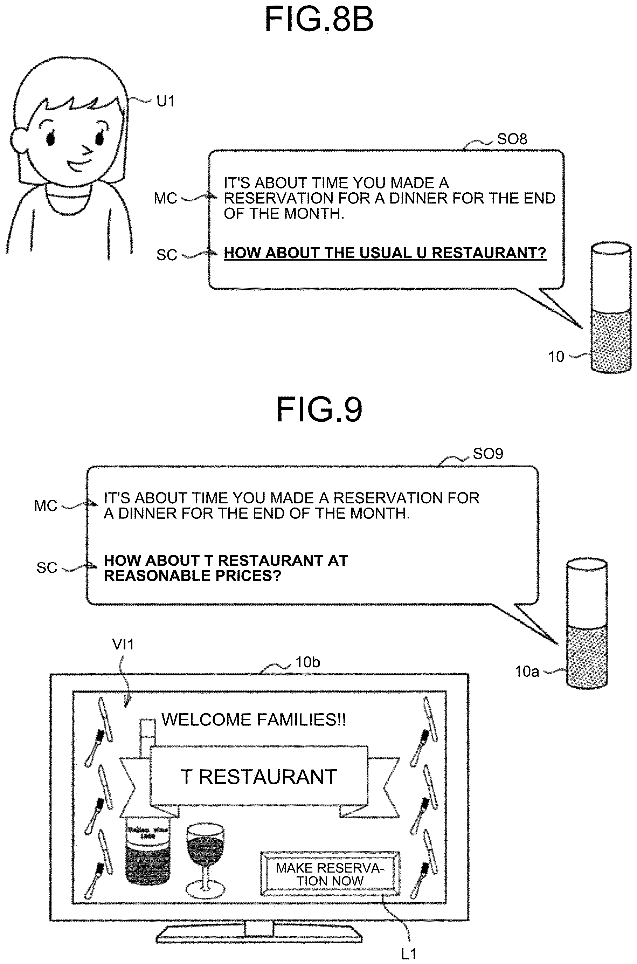

In addition, the output control unit 230 according to the present embodiment can set the output mode of the sub-content, based on the history information related to the user. FIG. 8A and FIG. 8B are diagrams for describing setting of the output mode based on the history information. FIG. 8A and FIG. 8B indicate audio utterances SO7 and SO8, respectively. Each of the audio utterances includes the main content MC, which is the reminder of a schedule, and the sub-content SC, which is an advertisement for a restaurant.

In the case of the example illustrated in FIG. 8A, the output control unit 230 sets the output mode of the sub-content SC, based on a history of the reaction by the user against the sub-content output in the past. The output control unit 230 may output the sub-content SC by adopting a modified expression "fancy", based on, for example, a fact that the user U1 did not show a positive reaction to a modified expression "reasonable" used in the past. Thus, by learning the history information, the output control unit 230 according to the present embodiment can cause the sub-content to be output by using a more attractive output mode.

In addition, in the case of the example illustrated in FIG. 8B, the output control unit 230 sets the output mode of the sub-content SC, based on the reservation history of the user U1 in the past. For example, by using a modified expression "the usual" or changing the voice type, the output control unit 230 allows the user U1 to perceive that the sub-content SC being output is not information output for the first time. The above-described control by the output control unit 230 allows the user to recognize, for example, that an advertisement being output is related to a familiar product or service, so that the user can half-listen to the sub-content SC, without excessive concentration to listen. Meanwhile, by a difference in the output mode, the user can also recognize that the sub-content SC is information output for the first time. In this case, the user can take an action such as concentrating more on listening to the sub-content SC.

### (Display control linked with audio utterance)

Next, display control linked with the audio utterance by the output control unit 230 according to the present embodiment will be described. In the above description, a case has been mainly described where the output control unit 230 performs only the output control of the audio utterance. However, the output control unit 230 according to the present embodiment can perform the display control linked with the audio utterance.

FIG. 9 is a diagram for describing the display control linked with the audio utterance according to the present embodiment. FIG. 9 indicates an audio utterance SO9 output by the information processing terminal 10a and visual information VI1 output by an information processing terminal 10b. Thus, the output control unit 230 according to the present embodiment can cause the information processing terminal 10 to display the visual information VI1 corresponding to content of the sub-content SC. At this point, the output control unit 230 may cause the plurality of information processing terminals 10a and 10b to output the audio utterance SO9 and the visual information VI1, respectively, as illustrated; or may cause the single information processing terminal 10 to output the audio utterance SO9 and the visual information VI1, in a case where the information processing terminal 10 includes both the audio output unit 110 and the display unit 120.

In addition, the output control unit 230 can improve convenience for the user or enhance an advertising effect by, for example, including, in the visual information VI1, a link L1 to a purchase site or to a reservation site.

Note that the output control unit 230 may control display/non-display of the visual information VI1 according to a condition. The output control unit 230 can cause the visual information VI1 to be output, for example, only in a case where the user has showed interest in the sub-content SC during output of the sub-content SC. The recognition unit 210 can detect the above-described interest, based on, for example, expression of the user, an utterance from the user, or a line of sight of the user.

In addition, the output control unit 230 can cause the information processing terminal 10 to display visual information corresponding to the main content MC. In this case, the output control unit 230 may set the output mode related to the information so that the user can distinguish the main content MC and the sub-content SC, which are displayed as the visual information. The output control unit 230 can set the output mode so that, for example, a text font, text decoration, text size, text color, animation, arrangement, or the like is different between the main content MC and the sub-content SC.

The output control by the output control unit 230 according to the present embodiment has been described above in detail with the specific examples. As described above, the output control unit 230 according to the present embodiment can flexibly set the output mode of the sub-content, based on various contexts related to the sub-content. Note that the output control described by using FIG. 6 to FIG. 9 is merely an example. The output control unit 230 according to the present embodiment may be used in combination with a context or output mode described above, as appropriate.

### <<1.6. Flow of Output Control>>

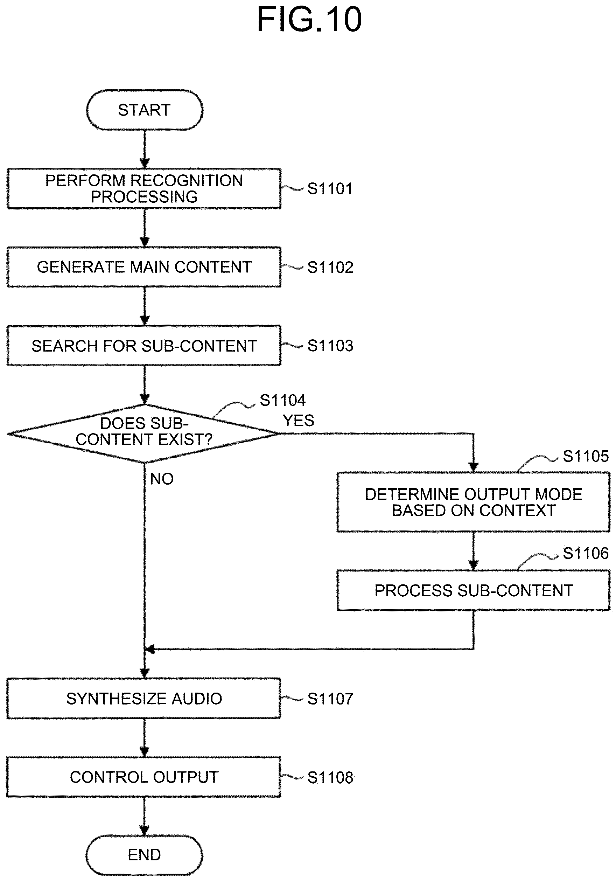

Next, a flow of the output control by the information processing server 20 according to the present embodiment will be described in detail. FIG. 10 is a flowchart describing a flow of the output control by the information processing server 20 according to the present embodiment.

With reference to FIG. 10, first, the recognition unit 210 of the information processing terminal 10 performs recognition processing (S1101). The recognition unit 210 performs, for example, sound recognition, user recognition, recognition of the state of the user, or the like, based on the utterance from the user.

Next, the main content generation unit 220 generates the main content, based on the text information or the like generated by the sound recognition in Step S1101 (S1102). As described above, the above-described main content may be, for example, the answer to the query from the user. In addition, the main content may be, for example, the reminder of the schedule or a received message.

Next, the output control unit 230 search for sub-content, based on the main content generated in Step S1102 (S1103). At this point, the output control unit 230 may search for related sub-content, based on, for example, a word included in the main content.

Here, in a case where sub-content related to the main content exists (S1104: YES), the output control unit 230 sets the output mode of the sub-context, based on the context related to the sub-content (S1105). At this point, the output control unit 230 can set the output mode of the sub-content, based on the category or the sender of the sub-content, the user property, the state of the user, the history information, or the like.

In addition, based on the output mode set in Step S1105, the output control unit 230 processes the modified expression, the tone of voice, a prefix and a suffix, the ending of the word, or the like in the sub-content (S1106).

In a case where the processing in Step S1106 is completed, or in a case where the corresponding sub-content does not exist (S1104: NO), the output control unit 230 causes the audio synthesis unit 240 to perform audio synthesis, based on the main content generated in Step S1103 or on the sub-content processed in Step S1106 (S1107).

Next, the terminal communication unit 260 transmits the artificial voice synthesized in Step S1107 or the control signal related to the output mode set in Step S1105 to the information processing terminal 10, and the output control related to the output of the audio utterance or the visual information is performed.

### <2. Configuration Example of Hardware>

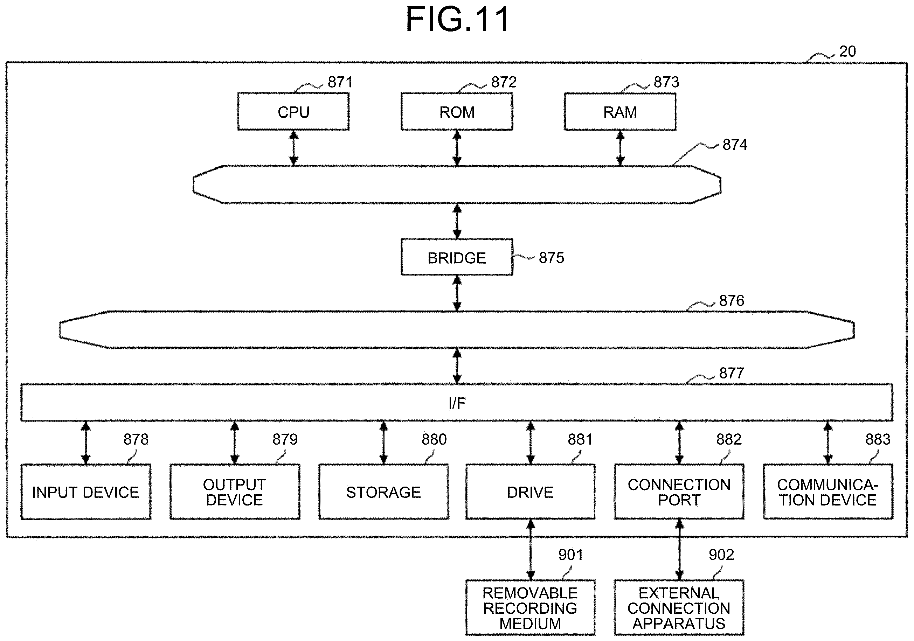

Next, a configuration example of hardware common to an information processing terminal 10 and an information processing server 20 according to an embodiment of the present disclosure will be described. FIG. 11 is a block diagram illustrating the configuration example of the hardware of the information processing terminal 10 and the information processing server 20 according to the embodiment of the present disclosure. With reference to FIG. 11, the information processing terminal 10 and the information processing server 20 include, for example, a CPU 871, a ROM 872, a RAM 873, a host bus 874, a bridge 875, an external bus 876, an interface 877, an input device 878, an output device 879, a storage 880, a drive 881, a connection port 882, and a communication device 883. Note that the configuration of the hardware indicated here is an example, and a part of the components may be omitted. In addition, a component other than the components indicated here may be included.

### (CPU 871)

The CPU 871 functions as, for example, an arithmetic processing device or a control device, and controls an entire or a part of operation of each component, based on various programs recorded in the ROM 872, the RAM 873, the storage 880, or a removable recording medium 901.

### (ROM 872, RAM 873)

The ROM 872 is a means to store a program to be read by the CPU 871, data to be used for arithmetic, or the like. The RAM 873 temporarily or permanently stores, for example, a program to be read by the CPU 871, or various parameters or the like that change as appropriate when the program is executed.

### (Host bus 874, bridge 875, external bus 876, and interface 877)

The CPU 871, the ROM 872, and the RAM 873 are connected to one another via, for example, the host bus 874 capable of high-speed data transmission. Meanwhile, for example, the host bus 874 is connected via the bridge 875 to the external bus 876 having relatively low data transmission speed. In addition, the external bus 876 is connected to various components via the interface 877.

### (Input device 878)

As the input device 878, for example, a mouse, a keyboard, a touch panel, a button, a switch, or a lever is used. Furthermore, as the input device 878, a remote controller (hereinafter referred to as the remote controller) that can transmit a control signal by using infrared light or another radio wave is sometimes used. In addition, the input device 878 includes an audio input device such as a microphone.

### (Output device 879)

The output device 879 is a device that can visually or aurally transmit obtained information to the user, and the output device 879 is, for example, a display device such as a cathode ray tube (CRT), an LCD, or an organic EL; an audio output device such as a speaker or a headphone; a printer; a mobile phone; or a facsimile. In addition, the output device 879 according to the present disclosure includes various vibration devices that can output tactile stimulation.

### (Storage 880)

The storage 880 is a device to store various data. As the storage 880, for example, a magnetic storage device such as a hard disk drive (HDD), a semiconductor storage device, an optical storage device, or a magneto-optical storage device is used.

### (Drive 881)

The drive 881 is, for example, a device to read information recorded in the removable recording medium 901 such as a magnetic disk, an optical disc, a magneto-optical disk, or a semiconductor memory; or to write information into the removable recording medium 901.

### (Removable recording medium 901)

The removable recording medium 901 is, for example, a DVD medium, a Blu-ray (registered trademark) medium, an HD DVD medium, or various semiconductor storage media. Needless to say, the removable recording medium 901 may be, for example, an IC card on which a contactless IC chip is mounted, or an electronic apparatus.

### (Connection port 882)

The connection port 882 is, for example, a port to connect external connection apparatus 902, such as a universal serial bus (USB) port, an IEEE1394 port, a small computer system interface (SCSI), an RS-232C port, or an optical audio terminal.

### (External connection apparatus 902)

The external connection apparatus 902 is, for example, a printer, a portable music player, a digital camera, a digital video camera, or an IC recorder.

### (Communication device 883)

The communication device 883 is a communication device to connect to a network, and is, for example, a communication card for a wired or wireless LAN, Bluetooth (registered trademark), or a wireless USB (WUSB); a router for optical communication, a router for asymmetric digital subscriber line (ADSL), or a modem used for a various communication.

### <3. Conclusion>

As described above, the information processing server 20 according to the present embodiment controls the output of the audio utterances including the main content and the sub-content. At this point, the information processing server 20 according to the present embodiment can control the information processing terminal 10 so that the sub-content is output in an output mode different from an output mode of the main content. With this configuration, it is possible to allow a user to clearly perceive classification of information even in a case where the output of audio that includes information for different purposes is performed.

Although the preferred embodiment of the present disclosure has been described above in detail with reference to the appended drawings, a technical scope of the present disclosure is not limited to this example. It is obvious that a person with an ordinary skill in a technological field of the present disclosure could conceive of various alterations or corrections within the scope of the technical ideas described in the appended claims, and it should be understood that such alterations or corrections will naturally belong to the technical scope of the present disclosure. It is possible to allow a user to clearly perceive classification of information even in a case where output of audio that includes information for different purposes is performed.

In addition, the effects described in this specification are just explanatory or exemplary effects, and are not limitative. That is, with or in the place of the above-described effects, the technology according to the present disclosure may achieve any other effects that are obvious, from description of this specification, for a person skilled in the art.

In addition, each step related to processing by the information processing server 20 in this specification does not necessarily have to be performed in time series according to an order described as a flowchart. For example, each step related to the processing by the information processing server 20 may be performed in an order different from the order described as the flowchart, or may be performed in parallel.

Note that the following configurations also belong to the technical scope of the present disclosure.
(1) An information processing device comprising an output control unit that controls output of an audio utterance in an audio conversation with a user,
   wherein the audio utterance includes main content and
   sub-content accompanied with the main content, and the output control unit causes the sub-content to be output in an output mode different from an output mode of the main content.
(2) The information processing device according to (1),
   wherein the output control unit sets the output mode of the sub-content, based on a context related to the sub-content.
(3) The information processing device according to (2),
   wherein the context includes a characteristic of the sub-content, and
   the output control unit sets the output mode, based on the characteristic of the sub-content.
(4) The information processing device according to (2) or (3),
   wherein a characteristic of the sub-content includes a category of the sub-content, and
   the output control unit sets the output mode, based on the category of the sub-content.
(5) The information processing device according to any one of (2) to (4),
   wherein a characteristic of the sub-content includes a sender of the sub-content, and
   the characteristic of the sub-content sets the output mode, based on the sender of the sub-content.
(6) The information processing device according to any one of (2) to (5),
   wherein the context includes a characteristic of the user, and the output control unit sets the output mode, based on the characteristic of the user.
(7) The information processing device according to (6),
   wherein the characteristic of the user includes a user property, and
   the output control unit sets the output mode, based on the user property.
(8) The information processing device according to (6) or (7),
   wherein the characteristic of the user includes a state of the user, and
   the output control unit sets the output mode, based on the state of the user.
(9) The information processing device according to any one of (6) to (8),
   wherein the characteristic of the user includes history information related to the user, and
   the output control unit sets the output mode, based on the history information related to the user.
(10) The information processing device according to any one of (1) to (9),
   wherein the output mode includes a voice type, and
   the output control unit causes the sub-content to be output by using a voice type different from a voice type of the main content.
(11) The information processing device according to any one of (1) to (10),
   wherein the output mode includes a tone of voice, and
   the output control unit causes the sub-content to be output by using a tone of voice different from a tone of voice of the main content.
(12) The information processing device according to any one of (1) to (11),
   wherein the output mode includes a prefix or a suffix, and
   the output control unit causes the sub-content to which at least one of a prefix or a suffix is added to be output.
(13) The information processing device according to any one of (1) to (12),
   wherein the output mode includes rhythm, and
   the output control unit causes the sub-content to be output by using rhythm different from rhythm for the main content.
(14) The information processing device according to any one of (1) to (13),
   wherein the output mode includes change in an ending of a word, and
   the output control unit causes the sub-content to be output by using an ending of a word different from an ending of the word for the main content.
(15) The information processing device according to any one of (1) to (14),
   wherein the output mode includes a background sound or a sound effect, and
   the output control unit causes the sub-content to be output by using a background sound or a sound effect different from a background sound or a sound effect for the main content.
(16) The information processing device according to any one of (1) to (15),
   wherein the sub-content includes an advertisement related to the main content.
(17) The information processing device according to any one of (1) to (17),
   wherein the output control unit further comprises obtaining the sub-content, based on the generated main content.
(18) The information processing device according to any one of (1) to (17), further comprising an audio output unit that outputs the audio utterance, based on control by the output control unit.
(19) The information processing device according to any one of (1) to (18), further including an audio synthesis unit that synthesizes an artificial voice related to the audio utterance, based on control by the output control unit.
(20) An information processing method comprising
   controlling, by a processor, output of an audio utterance in an audio conversation with a user,
   wherein the audio utterance includes main content and sub-content accompanied with the main content, and
   the controlling further comprises causing the sub-content to be output in an output mode different from an output mode of the main content.
(21) A program for causing a computer to function as
   an information processing device comprising an output control unit that controls output of an audio utterance in an audio conversation with a user,
   wherein the audio utterance includes main content and sub-content accompanied with the main content, and
   the output control unit causes the sub-content to be output in an output mode different from an output mode of the main content.

### Reference Signs List

- 10: Information processing terminal
- 110: Audio output unit
- 120: Display unit
- 130: Audio input unit
- 140: Imaging unit
- 150: Control unit
- 160: Server communication unit
- 20: Information processing server
- 210: Recognition unit
- 220: Main content generation unit
- 230: Output control unit
- 240: Audio synthesis unit
- 250: Storage unit
- 252: User DB
- 254: Output mode DB
- 256: Sub-content DB
- 260: Terminal communication unit

## Claims

1. An information processing device comprising an output control unit that controls output of an audio utterance in an audio conversation with a user,
wherein the audio utterance includes main content and
sub-content accompanied with the main content, and the output control unit causes the sub-content to be output in an output mode different from an output mode of the main content.

2. The information processing device according to claim 1,
wherein the output control unit sets the output mode of the sub-content, based on a context related to the sub-content.

3. The information processing device according to claim 2,
wherein the context includes a characteristic of the sub-content, and
the output control unit sets the output mode, based on the characteristic of the sub-content.

4. The information processing device according to claim 2,
wherein a characteristic of the sub-content includes a category of the sub-content, and
the output control unit sets the output mode, based on the category of the sub-content.

5. The information processing device according to claim 2,
wherein a characteristic of the sub-content includes a sender of the sub-content, and
the characteristic of the sub-content sets the output mode, based on the sender of the sub-content.

6. The information processing device according to claim 2,
wherein the context includes a characteristic of the user, and the output control unit sets the output mode, based on the characteristic of the user.

7. The information processing device according to claim 6,
wherein the characteristic of the user includes a user property, and
the output control unit sets the output mode, based on the user property.

8. The information processing device according to claim 6,
wherein the characteristic of the user includes a state of the user, and
the output control unit sets the output mode, based on the state of the user.

9. The information processing device according to claim 6,
wherein the characteristic of the user includes history information related to the user, and
the output control unit sets the output mode, based on the history information related to the user.

10. The information processing device according to claim 1,
wherein the output mode includes a voice type, and
the output control unit causes the sub-content to be output by using a voice type different from a voice type of the main content.

11. The information processing device according to claim 1,
wherein the output mode includes a tone of voice, and
the output control unit causes the sub-content to be output by using a tone of voice different from a tone of voice of the main content.

12. The information processing device according to claim 1,
wherein the output mode includes a prefix or a suffix, and
the output control unit causes the sub-content to which at least one of a prefix or a suffix is added to be output.

13. The information processing device according to claim 1,
wherein the output mode includes rhythm, and
the output control unit causes the sub-content to be output by using rhythm different from rhythm for the main content.

14. The information processing device according to claim 1,
wherein the output mode includes change in an ending of a word, and
the output control unit causes the sub-content to be output by using an ending of a word different from an ending of the word for the main content.

15. The information processing device according to claim 1,
wherein the output mode includes a background sound or a sound effect, and
the output control unit causes the sub-content to be output by using a background sound or a sound effect different from a background sound or a sound effect for the main content.

16. The information processing device according to claim 1,
wherein the sub-content includes an advertisement related to the main content.

17. The information processing device according to claim 1,
wherein the output control unit further comprises obtaining the sub-content, based on the generated main content.

18. The information processing device according to claim 1, further comprising an audio output unit that outputs the audio utterance, based on control by the output control unit.

19. An information processing method comprising
controlling, by a processor, output of an audio utterance in an audio conversation with a user,
wherein the audio utterance includes main content and sub-content accompanied with the main content, and
the controlling further comprises causing the sub-content to be output in an output mode different from an output mode of the main content.

20. A program for causing a computer to function as
an information processing device comprising an output control unit that controls output of an audio utterance in an audio conversation with a user,
wherein the audio utterance includes main content and sub-content accompanied with the main content, and
the output control unit causes the sub-content to be output in an output mode different from an output mode of the main content.
an output mode different from an output mode of the main content.
